# EUROPÄISCHE PATENTANMELDUNG

(11) **EP 1 407 870 A1**
(43) Veröffentlichungstag der Anmeldung: **14.04.2004**
(21) Anmeldenummer: 03022489.3
(22) Anmeldetag: 08.10.2003
(51) Int. Cl.: B29C 45/30, B29C 45/27

(54) **Wärmetauscheranguss bzw. Vorrichtung für das Hot-cone-Verfahren für vernetzbare Polymere**

(30) Priorität: 09.10.2002 DE 10247085
(71) Anmelder: Bakelite AG, 58642 Iserlohn-Letmathe (DE)
(72) Erfinder: Bayerl, Heiko, 58640 Iserlohn (DE); Bayerl, Frank, 58091 Hagen (DE); Pahlke, Thorsten, 44139 Dortmund (DE); Hoster, Bernhard, 58339 Brecherfeld (DE); Kürten, Andreas, 58642 Iserlohn (DE)

(57) **Zusammenfassung**

Die Erfindung bezieht sich auf einen Wärmetauscheranguss zum Transport, Verteilung und Aufheizung einer vernetzbaren polymeren Masse durch Kontakt zwischen zumindest zwei aufheizbaren Bestandteilen, insbesondere einer Angussbuchse (2) und einem Angusskegel (11).

Um eine gezielte Wärmezuführung bei der Herstellung von Formteilen mittels "hot cone"-Verfahren zu gewährleisten, wodurch eine gleichmäßige Qualität der Produkte bei störungsfreien Verfahrenzyklen erzielt wird, wird vorgeschlagen, dass zumindest ein aufheizbarer Bestandteil aus zumindest zwei Schichten (3, 4), die gegebenenfalls durch einen Zwischenraum voneinander getrennt sind, aus jeweils verschiedenen Materialien A und B besteht, wobei die vernetzbare polymere Masse im wesentlichen mit dem Material A in Kontakt steht, welches eine niedrigere Wärmeleitfähigkeit besitzt als das Material B, was sich im wesentlichen in Kontakt mit der Heizquelle des aufheizbaren Bestandteiles befindet.

## Beschreibung

Die Erfindung betrifft einen Wärmetauscheranguss zum Transport, Verteilung und Aufheizung einer vernetzbaren polymeren Masse durch Kontakt zwischen zumindest zwei aufheizbaren Bestandteilen, insbesondere einer Angussbuchse und einem Angusskegel.

Solche Vorrichtungen sind aus dem Stand der Technik insbesondere zur Herstellung von duroplastischen Formkörpern, insbesondere unter dem Begriff "hot cone" bekannt. Eine flüssige oder plastische, vernetzbare polymere Masse wird mit einer Temperatur von ca. 100 °C und unter Druck in eine Vorrichtung (Spritzgießverfahren) mit Wärmetauscheranguss eingespritzt und zwischen einer beheizten Angussbuchse und einem beheizten Angusskegel des Wärmetauscherangusses geleitet. Dabei erfolgt die weitere Erwärmung der polymeren Masse und gleichzeitig der Transport in die sich in der Vorrichtung befindlichen Formnester. Dort soll die endgültige Vernetzung der polymeren Masse zu einem Formkörper erfolgen. Entsprechende Verfahren werden in der US 4,451,224 und in der US 4,540,541 offenbart.

In der Praxis konnte sich dieses Verfahren allerdings nicht durchsetzen, da eine unkontrollierte Wärmeströmung sowohl im Wärmetauscheranguss als auch in der ihn umgebenden Vorrichtung zu vorzeitigen Reaktionen des Polymers führten, wodurch es einerseits zu Defekten in der Vorrichtung kam und andererseits eine Überhärtung des Polymers auftrat, die sich negativ auf die Eigenschaften des Formkörpers auswirkte. Aus diesen Gründen war das bisherige Verfahren sehr ineffizient, und oftmals musste der Verarbeitungszyklus abgebrochen werden.
Versuche, Formkörper trotz unkontrollierter Wärmeströmung herzustellen und entsprechende Nachteile durch Erhöhung des Einspritzdruckes auszugleichen, brachten Defekte in den Formnestern mit sich. Bei faserenthaltenden Formmassen trat zusätzlich der Nachteil auf, das die Fasern durch die hohen auftretenden Friktionsenergien geschädigt wurden.

Aufgabe der vorliegenden Erfindung besteht darin, eine gezielte Wärmezuführung bei der Herstellung von Formteilen mittels "hot cone"-Verfahren zu gewährleisten, wodurch eine gleichmäßige Qualität der Produkte bei störungsfreien Verfahrenzyklen erzielt wird.

Diese Aufgabe wird erfindungsgemäß dadurch gelöst, dass zumindest ein aufheizbarer Bestandteil des Wärmetauscherangusses aus zumindest zwei Schichten, die gegebenenfalls durch einen Zwischenraum voneinander getrennt sind, aus jeweils verschiedenen Materialien A und B besteht, wobei die vernetzbare polymere Masse im wesentlichen mit dem Material A in Kontakt steht, welches eine niedrigere Wärmeleitfähigkeit besitzt als das Material B, was sich im wesentlichen in Kontakt mit der Heizquelle des aufheizbaren Bestandteiles befindet.

Überraschenderweise konnte dabei festgestellt werden, dass eine optimale Wärmeverteilung erzielt wird. Die von der Heizquelle abgegebene Wärme wird von der Schicht mit dem Material B (hohe Wärmeleitfähigkeit) in hohem Umfang aufgenommen und im entsprechendem Angussteil weitergeleitet. Dann tritt die Schicht entweder mit einer weiteren Schicht, einem Zwischenraum, der mit Luft oder anderen wärmeleitfähigen Medien wie z. B. Flüssigkeiten (Öl) gefüllt ist oder bevorzugt direkt mit der Schicht mit dem Material A in Kontakt. Dieses ist weniger leitfähig als das Material B, so dass einerseits eine Überhitzung der Vorrichtung vermieden wird und gleichzeitig eine optimale Wärmeverteilung bis hin zum eigentlichen Formgebungsprozess erfolgen kann. An den erfindungsgemäßen Wärmetauscheranguss kann sich z. B. als weitere Vorrichtung ein Formgebungswerkzeug oder auch z. B. ein Extruder anschließen.

Besonders bevorzugt ist, wenn das Material A eine mindestens 7 bis 10 mal niedrigere Wärmeleitfähigkeit besitzt als das Material B aufweist. Dadurch wird der Wärmetauscheranguss optimal ausgelegt.

Generell ist es - wie bereits erwähnt - möglich, dass die Angussbuchse und/oder der Angusskegel aus mehr als zwei Schichten aufgebaut ist, die in direktem Kontakt miteinander stehen oder über einen Zwischenraum miteinander verbunden sind. Wesentlich ist, dass sich im wesentlichen um die Heizquelle eine Schicht mit einem Material B mit einer höheren Wärmeleitfähigkeit befindet als die einer Schicht mit dem Material A, die im unmittelbaren Kontakt mit der zu vemetzenden polymeren Masse steht. Damit wird einerseits eine optimale Wärmeaufnahme und andererseits eine gute Wärmeverteilung erreicht. Entsprechend dazwischen können weitere Schichten mit angepassten Wärmeleitfähigkeiten vorhanden sein. Dabei nimmt die Wärmeleitfähigkeit der Schichten ausgehend von der Heizquelle vorzugsweise im wesentlichen ab.

Besonders bevorzugt ist, wenn die Angussbuchse aus zwei verschiedenen Materialien besteht. Es hat sich nämlich herausgestellt, dass bisher im großen Maße der Wärmeabfluss von der Angussbuchse erfolgt ist, so dass es besonders effektiv ist, insbesondere diese erfmdungsgemäß aufzubauen. Verstärkt wird dieser Effekt aber noch dadurch, dass zusätzlich der Angusskegel aus zumindest zwei verschiedenen Materialien A und B besteht.

Das Material A besitzt vorzugsweise eine Wärmeleitfähigkeit von 10-50 W m⁻¹ K⁻¹ und das Material B eine Wärmeleitfähigkeit von 100-500 W m⁻¹ K⁻¹. Als Material A kommen somit z. B. verschiedene Stahllegierungen in Frage, die vorteilhafterweise zusätzlich noch hochverschleißfest sind. Ein Material mit einer Wärmeleitfähigkeit von 100-500 W m⁻¹ K⁻¹ ist z. B. Kupfer oder auch Kupfer-Berylliumlegierungen.

Besonders bevorzugt ist, wenn der Wärmetauscheranguss aus zwei Schichten aufgebaut ist, und diese miteinander direkt in Kontakt stehen. Das kann durch genaues Einpassen der beiden Schichten oder auch durch Hilfsmittel wie z. B. Kleber erfolgen. Vorteilhafterweise sind die Schichten bestehend aus den Materialien A und B mittels an sich bekannter Vakuumlöttechnik verbunden. Durch diese Technik wird ein besonders enger Kontakt zwischen den Schichten hergestellt. Dadurch wird der Wärmeverlust von der Schicht mit dem Material A zur Schicht mit dem Material B gering gehalten, wenn es beim Prozess um eine möglichst hohe Wärmübertragung ankommt. Wird gewünscht, dass eine äußerst gleichmäßige Wärmeübertragung auf hohem Niveau erfolgen soll, kann es von Vorteil sein, wenn sich zwischen den Schichten A und B ein Zwischenraum, der gefüllt sein kann mit Luft oder auch mit einer Flüssigkeit, befindet.

Die Beheizung des Angussbuchse erfolgt vorzugsweise über Wendelrohrheizpatronen, die direkt auf die Schicht mit dem Material B aufgebracht werden. Um wiederum den Wärmeverlust gering zu halten, werden diese mittels Vakuumlöttechnik mit dem Material B verbunden. Es ist aber auch möglich, dass andere Heizquellen für die Beheizung der Angussbuchse verwendet werden, wie z. B. Heizbänder oder flüssige Medien. Bei Angusskegeln werden aufgrund der Geometrie bevorzugt Heizpatronen verwendet.

Der erfindungsgemäße Wärmetauscheranguss kann in Vorrichtungen zum Transport und/oder zur Formgebung für sämtliche in der Hitze vernetzbaren Polymere verwendet werden, vorzugsweise in Vorrichtung zur Herstellung von duroplastischen Formkörpern, insbesondere Topfbeschläge, Pfannenbeschläge, Griffe, Bedienelemente, Riemenscheiben, Gehäuseteilen, oder aber auch für die Herstellung von vernetzten Kautschuk (Elastomer).

Für die Herstellung eines vernetzten polymeren Formkörpers ist ein Verfahren folgende Schritte enthaltend von Vorteil:
a) Plastifizieren der vernetzbaren polymeren Masse
b) Einspritzen der plastifizierten vernetzbaren polymeren Masse unter Druck (ca. 2-200 bar) in die einen aufgeheizten Wärmetauscheranguss nach Anspruch 1 enthaltende Vorrichtung
c) weitere Erwärmung, Verteilung und Transport der zu vernetzenden polymeren Masse über den aufgeheizten Wärmetauscheranguss nach Anspruch 1 in die Formnester, wobei die Vernetzung (Druck ca. 50-800 bar) erfolgt und
d) Entnahme des vernetzten polymeren Formkörpers aus den Formnestern.

Durch die Verwendung des erfindungsgemäßen Wärmetauscherangusses in einem entsprechenden Verfahren, z. B. Spritzgießverfahren, wird eine optimale Temperaturverteilung in der Vorrichtung erzielt. So erfolgt kaum ein Wärmeabfluss an unerwünschte Stellen der Vorrichtung, so dass die Härtungszeiten verkürzt und das Verfahren effektiver gestaltet werden kann. Trotz der kurzen Verweilzeit im Wärmetauscheranguss wird erfindungsgemäß die zu vernetzende polymere Masse bis zu ca. 30 °C mehr erwärmt als bei herkömmlichen "hot cone"-Verfahren, was eine verringerte Viskosität während des Transports im Wärmetauscheranguss, über den Verteilerkanal bis hin in die Formnester zur Folge hat. Die Verringerung der Viskosität im System führt letztendlich zu einer verbesserten Formbefüllung, was wiederum einen positiven Einfluss auf die Qualität des Formkörpers hat.

Des weiteren zeigen die hergestellten Formkörper eine reduzierte Schwindung, was abhängig von ihrer Geometrie zu einem reduzierten Verzug führen kann. Außerdem konnte festgestellt werden, dass die mit dem erfindungsgemäßen Verfahren hergestellten Formkörper in der Regel verbesserte mechanische und/oder elektrische Eigenschaften aufweisen.

Außerdem werden geringere Drücke während des Verfahrens erforderlich, was einerseits die zu vernetzende polymere Masse als auch die restlichen Teile der Vorrichtung, wie z. B. die Formnester schont.
Insbesondere für faserenthaltende zu vernetzende Formmassen sind verminderte Drücke von Vorteil, da somit Schäden z. B. an Glasfasern vermieden werden.

Besonders bevorzugt ist, wenn die Temperatur der Formnester bis zu 100 °C niedriger ist als die Schicht A des Materials des Wärmetauscherangusses. Es wird somit weiter vermieden, dass die eigentliche Vernetzung schon erfolgt, wenn das Formnest noch nicht vollständig gefüllt ist. Weiterhin können thermische Schäden des Formkörpers ausgeschlossen werden.

Anhand eines Ausführungsbeispiels soll die Erfindung näher erläutert werden:

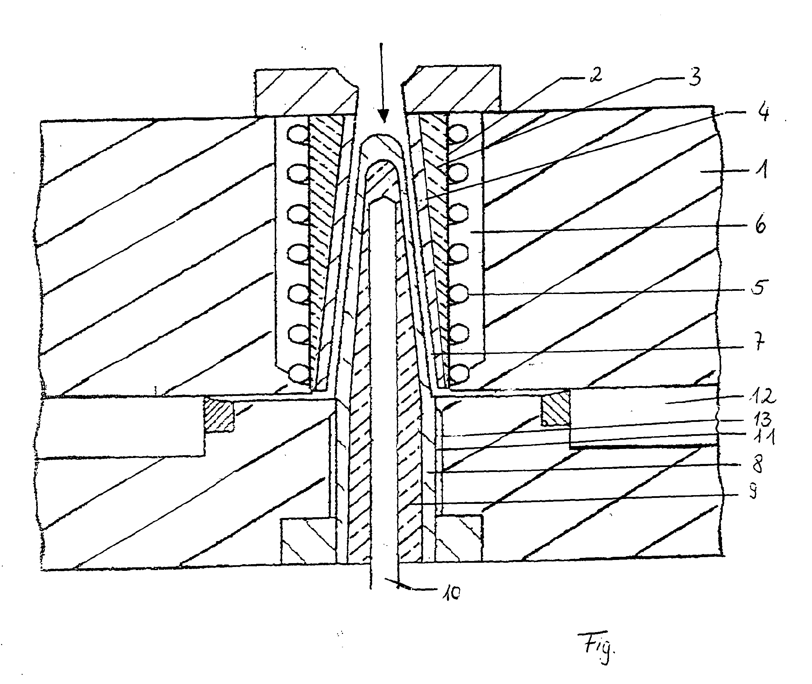

Es zeigt die einzige Figur schematisch einen Querschnitt durch eine Vorrichtung zur Herstellung eines polymeren vernetzten Formkörpers unter Verwendung des erfindungsgemäßen Wärmetauscherangusses.

Aus einer Plastifizierungsvorrichtung (z. B. einem Schneckenextruder) wird mit einem Druck von 180 bar und bei einer Temperatur von ca. 105 °C eine unvernetzte Formmasse aus Phenol-Formaldehyd-Harz, Vernetzungsmittel (Hexaphenylentetramin), Pigmente, Füllstoffen, Verarbeitungshilfsmittel und gegebenenfalls Verstärkungsfasern in die Vorrichtung 1 eingeführt. Diese weist einen Wärmetauscheranguss mit einer Angussbuchse 2 und einem Angusskegel 11 auf. Die Angussbuchse 2 ist aus zwei verschiedenen Schichten 3 und 4 aufgebaut, wobei die Schicht 3 aus Kupfer ist und im direkten Kontakt sowohl mit der Wendelheizpatrone 5 als auch mit der Schicht 4, die aus einer Stahllegierung besteht, steht. Zur besseren Wärmezirkulation ist die Wendelheizpatrone 5 von einem luftgefüllten Zwischenraum 6 umgeben, der die thermische Isolation zu den niedriger temperierten Formgebungsnestern gewährleistet. Von der Angussbuchse 2 eingeschlossen, befindet sich der Angusskegel 11, der kegelförmig ausgebildet ist und ebenfalls aus zwei verschiedenen Schichten 8 und 9 besteht. Die Schicht 9 (Kupfer) steht wiederum im direkten Kontakt mit der Heizpatrone 10 und der Schicht 8 (Stahllegierung). Eine Isolationsschicht 13 (Luft, hitzebeständige Keramik) dient der Verhinderung des Wärmeflusses in andere Teile der Vorrichtung, z. B in das Formgebungswerkzeug.

Die zu vemetzende polymere Formasse durchläuft den Zwischenraum 7 zwischen der Schicht 4 der Angussbuchse 2 und der Schicht 8 des Angusskegels 11. Die Stahlschichten 4 und 8 sind auf 230 °C aufgeheizt und zwar ausgehend von der Wendelheizpatrone 5 bzw. Heizpatrone 10 über die höher wärmeleitfähigen Kupferschichten 3 bzw. 9. Die Angussbuchse 2 und der Angusskegel 11 geben den Transportweg der zu vernetzenden Formmasse vor. Eine optimale Wärmeverteilung, die durch den schichtweisen Aufbau des Wärmetauscherangusses gewährleistet wird, wird über den gesamten Weg den die Formmasse zurücklegt, erzielt.
Wenn die zu vernetzende Formmasse das Formnest 12 erreicht hat, kann dort optimal temperaturgesteuert (ca. 170 °C) die Vernetzung abgeschlossen werden. Entnommen werden kann ein Bauteil, das keiner Überhitzung ausgesetzt war und somit entsprechenden Qualitätskriterien standhält.

## Patentansprüche

1. Wärmetauscheranguss zum Transport, Verteilung und Aufheizung einer vernetzbaren polymeren Masse durch Kontakt zwischen zumindest zwei aufheizbaren Bestandteilen, insbesondere einer Angussbuchse (2) und einem Angusskegel (11), **dadurch gekennzeichnet, dass** zumindest ein aufheizbarer Bestandteil aus zumindest zwei Schichten (3, 4), die gegebenenfalls durch einen Zwischenraum voneinander getrennt sind, aus jeweils verschiedenen Materialien A und B besteht, wobei die vernetzbare polymere Masse im wesentlichen mit dem Material A in Kontakt steht, welches eine niedrigere Wärmeleitfähigkeit besitzt als das Material B, was sich im wesentlichen in Kontakt mit der Heizquelle (5) des aufheizbaren Bestandteiles befindet.

2. Wärmetauscheranguss nach Anspruch 1, **dadurch gekennzeichnet, dass** das Material A eine mindestens 7 bis 10 mal niedrigere Wärmeleitfähigkeit besitzt als das Material B.

3. Wärmetauscheranguss nach Anspruch 1 und/oder 2, **dadurch gekennzeichnet, dass** die Angussbuchse (2) aus zwei verschiedenen Materialien besteht.

4. Wärmetauscheranguss nach Anspruch 3, **dadurch gekennzeichnet, dass** der Angusskegel (11) aus zwei verschiedenen Materialien besteht.

5. Wärmetauscheranguss nach zumindest einem der vorhergehenden Ansprüche, **dadurch gekennzeichnet, dass** das Material A eine Wärmeleitfähigkeit von 10-50 W m⁻¹ K⁻¹ und das Material B eine Wärmeleitfähigkeit von 100-500 W m⁻¹ K⁻¹ aufweist.

6. Wärmetauscheranguss nach Anspruch 5, **dadurch gekennzeichnet, dass** das Material B Kupfer enthält.

7. Wärmetauscheranguss nach zumindest einem der vorhergehenden Ansprüche, **dadurch gekennzeichnet, dass** die Schichten (3, 4) bestehend aus den Materialien A und B miteinander in Kontakt stehen.

8. Wärmetauscheranguss nach Anspruch 7, **dadurch gekennzeichnet, dass** die Schichten (3, 4) bestehend aus den Materialien A und B mittels Vakuumlöttechnik miteinander verbunden sind.

9. Wärmetauscheranguss nach zumindest einem der vorhergehenden Ansprüche, **dadurch gekennzeichnet, dass** Wendelrohrheizpatronen (5) auf die Angussbuchse (2) mittels Vakuumlöttechnik aufgebracht werden.

10. Verwendung des Wärmeaustauscherangusses nach zumindest einem der vorhergehenden Ansprüche zur Herstellung von duroplastischen Formkörpern.

11. Verfahren zur Herstellung eines vernetzten polymeren Formkörpers folgende Schritte enthaltend:
a) Plastifizieren der vernetzbaren polymeren Masse
b) Einspritzen der plastifizierten vernetzbaren polymeren Masse unter Druck in die einen aufgeheizten Wärmetauscheranguss nach Anspruch 1 enthaltende Vorrichtung
c) weitere Erwärmung, Verteilung und Transport der zu vernetzenden polymeren Masse über den aufgeheizten Wärmetauscheranguss nach Anspruch 1 in die Formnester, wobei die Vernetzung erfolgt und
d) Entnahme des vernetzten polymeren Formkörpers aus den Formnestem.

12. Verfahren zur Herstellung eines vernetzten polymeren Formkörpers nach Anspruch 11, **dadurch gekennzeichnet, dass** die Temperatur der Formnester (12) bis zu 100 °C niedriger ist als die der Schichten mit dem Material A des Wärmetauscherangusses.
